# EUROPEAN PATENT APPLICATION

(11) **EP 4 843 680 A1**
(43) Date of publication of application: **25.11.2026**
(21) Application number: 24931343.8
(22) Date of filing: 22.08.2024
(51) Int. Cl.: B05C 11/10, H01M 10/54

(54) **SLURRY RECOVERY METHOD**

(30) Priority: 27.03.2024 CN 202410361467
(71) Applicant: Contemporary Amperex Technology Co., Limited, Ningde, Fujian 352100 (CN); Sichuan Contemporary Amperex Technology Limited, Yibin, Sichuan 644000 (CN)
(72) Inventor: LAI, Fei, Ningde, Fujian 352100 (CN); LUO, Yuhong, Ningde, Fujian 352100 (CN); ZHANG, Jian, Ningde, Fujian 352100 (CN); HU, Wei, Ningde, Fujian 352100 (CN)
(74) Representative: Lorenz Seidler Gossel Part. mbB
(86) International application number: PCT/CN2024/114067
(87) International publication number: WO 2025/200260

(57) **Abstract**

The present application provides a slurry recovery method, and belongs to the technical field of battery manufacturing. The slurry recovery method comprises: measuring the viscosity of an electrode slurry utilized during an electrode coating process; and in response to the viscosity of the electrode slurry being not greater than a viscosity threshold value, performing slurry preparation on the electrode slurry according to a first slurry preparation process to obtain a slurry that can be used again, or in response to the viscosity of the electrode slurry being greater than the viscosity threshold value, performing slurry preparation on the electrode slurry according to a second slurry preparation process to obtain a slurry that can be used again, the second slurry preparation process being different from the first slurry preparation process.

## Description

### CROSS-REFERENCE TO RELATED APPLICATIONS

The present application makes reference to Chinese Patent Application No. 202410361467.2, filed on March 27, 2024 and entitled "SLURRY RECOVERY METHOD", which is incorporated herein by reference in its entirety.

### TECHNICAL FIELD

The present application relates to the field of battery manufacturing technologies, and in particular, to a slurry recovery method.

### BACKGROUND

Energy saving and emission reduction are keys to sustainable development of the automobile industry, and electric vehicles have become an important part of the sustainable development of the automobile industry due to their advantages of energy saving and environmental protection. For the electric vehicles, battery technologies are an important factor related to development of the electric vehicles.

Electrode coating is a key process during battery production, and coating quality is related to battery quality. An electrode slurry used in an electrode coating process is a uniform mixture composed of an active material, a conductive agent, a binder, a solvent, and the like. Quality of the electrode slurry directly affects performance and stability of a battery. During electrode coating, the electrode slurry undergoes physical gelation after being in a slurry tray for a period of time, causing wrinkling during coating. In this case, electrode slurry replacement is generally required, while scrap processing is performed on the original electrode slurry.

### SUMMARY

The present application aims to resolve at least one of technical problems existing in the related art. To this end, an objective of the present application is to provide a slurry recovery method, so as to relieve, alleviate, or eliminate the problems in the related technology.

An embodiment of a first aspect of the present application provides a slurry recovery method, including: measuring a viscosity of an electrode slurry used in an electrode coating process; and in response to the viscosity of the electrode slurry being not greater than a viscosity threshold, performing slurry preparation on the electrode slurry according to a first slurry preparation process to obtain a reusable slurry; or in response to the viscosity of the electrode slurry being greater than the viscosity threshold, performing slurry preparation on the electrode slurry according to a second slurry preparation process to obtain a reusable slurry, where the second slurry preparation process is different from the first slurry preparation process.

In the technical solution of this embodiment of the present application, different slurry preparation processes are used to process the recovered battery slurry based on the viscosity of the electrode slurry, so that recovered electrode slurries of different viscosities can satisfy a viscosity requirement for reuse after being processed, implementing electrode slurry recovery and reuse, which reduces scrap of the electrode slurry and improves utilization.

In some embodiments, the first slurry preparation process includes: circulating a coarse mixed slurry prepared from a powder material and a solvent, a binder, and the electrode slurry between a first circulation tank and a second circulation tank for first duration via a first pipe, where the first pipe connects the first circulation tank and the second circulation tank, the first pipe is provided with a disperser including an impeller, and the impeller rotates at a first rotational speed. When the viscosity of the recovered electrode slurry is relatively low, the recovered electrode slurry, the coarse mixed slurry, and the binder are circulated by using the two circulation tanks and the disperser, so that the reusable slurry obtained after the circulation has a viscosity satisfying a use requirement and can be used again, thereby improving the utilization of the electrode slurry.

In some embodiments, circulating the coarse mixed slurry prepared from the powder material and the solvent, the binder, and the electrode slurry between the first circulation tank and the second circulation tank via the first pipe includes: rotating the first circulation tank at a second rotational speed, and rotating the second circulation tank at a third rotational speed, the second rotational speed and the third rotational speed being less than the first rotational speed. During circulation, the two circulation tanks rotate at the same time when dispersion is performed using the disperser, so that dispersive mixing of the coarse mixed slurry, the binder, and the electrode slurry can be more uniform, thereby improving a dispersion effect.

In some embodiments, the powder material includes a first raw material and a second raw material. The first slurry preparation process further includes the following steps for preparing the coarse mixed slurry: performing dry mixing of the first raw material and the second raw material in a premixing tank, to obtain a premix; mixing the premix with the solvent to obtain a premixed slurry; and circulating the premixed slurry between the first circulation tank and the second circulation tank for second duration via the first pipe, to obtain the coarse mixed slurry, where the impeller rotates at a fourth rotational speed, the fourth rotational speed is greater than the first rotational speed, and the second duration is greater than the first duration. The two types of powder materials are premixed and then mixed with the solvent, followed by circulation using the two circulation tanks and the disperser, so that dispersive mixing of the coarse mixed slurry is more uniform, thereby improving quality of the coarse mixed slurry.

In some embodiments, the disperser is further connected to the premixing tank via a second pipe. Mixing the premix with the solvent to obtain the premixed slurry includes: adding the solvent into the first circulation tank; conveying the solvent from the first circulation tank to the disperser via the first pipe, and conveying the premix from the premixing tank to the disperser via the second pipe, where the impeller rotates at a fifth rotational speed to mix the premix with the solvent, and the fifth rotational speed is greater than the first rotational speed; conveying a mixture of the premix and the solvent from the disperser to the first circulation tank via the first pipe; and circulating the mixture of the premix and the solvent between the first circulation tank and the disperser for third duration, to obtain the premixed slurry, where the impeller rotates at the fifth rotational speed, and the third duration is greater than the first duration. After the premix is obtained, the premix and the solvent are dispersively mixed through the disperser, so that dispersive mixing of the premixed slurry is more uniform, thereby improving quality of the premixed slurry.

In some embodiments, circulating the mixture of the premix and the solvent between the first circulation tank and the disperser includes: rotating the first circulation tank at a sixth rotational speed, the sixth rotational speed being less than the first rotational speed. During circulation, the first circulation tank is rotated at the same time when dispersion is performed using the disperser, so that dispersive mixing of the premix and the solvent can be more uniform, thereby improving a dispersion effect.

In some embodiments, the second slurry preparation process includes: circulating the electrode slurry between the first circulation tank and the second circulation tank for fourth duration via the first pipe, where the first pipe connects the first circulation tank and the second circulation tank, the first pipe is provided with the disperser including the impeller, and the impeller rotates at a seventh rotational speed. When the viscosity of the recovered electrode slurry is relatively high, the recovered electrode slurry is individually circulated by using the two circulation tanks and the disperser, so that the reusable slurry obtained after the circulation has a viscosity satisfying the use requirement and can be used again, thereby improving the utilization of the electrode slurry and making it possible to simplify an operation process.

In some embodiments, circulating the electrode slurry between the first circulation tank and the second circulation tank via the first pipe includes: rotating the first circulation tank at an eighth rotational speed, and rotating the second circulation tank at a ninth rotational speed, the eighth rotational speed and the ninth rotational speed being less than the seventh rotational speed. During circulation, the two circulation tanks are rotated at the same time when dispersion is performed using the disperser, so that dispersive mixing of the recovered electrode slurry can be more uniform, thereby improving a dispersion effect.

In some embodiments, the slurry recovery method further includes: measuring a viscosity of the reusable slurry; and in response to the viscosity of the reusable slurry satisfying a preset viscosity range, adding the reusable slurry into a transfer tank for reuse in the electrode coating process. After the recovered electrode slurry is processed, the viscosity of the obtained reusable slurry is measured, and when the viscosity satisfies the use requirement, the reusable slurry can be used again, thereby reducing the scrap of the electrode slurry and improving the utilization.

In some embodiments, the electrode coating process includes a gravure process, and the electrode slurry includes an anode slurry. Through recovery processing on the anode slurry in the gravure process, the slurry can be used again, thereby reducing a waste of the anode slurry in the electrode coating process.

In some embodiments, the anode slurry includes sodium carboxymethyl cellulose, a styrene-butadiene latex, a conductive carbon powder, and deionized water, and the viscosity threshold is greater than or equal to 40 millipascals·second and less than or equal to 60 millipascals·second. An appropriate viscosity threshold is selected according to materials included in the anode slurry, to perform corresponding processing on the recovered anode slurry, which allows to improve quality of the obtained reusable slurry.

The foregoing descriptions are merely an overview of the technical solutions of the present application. To enable a clearer understanding of the technical means of the present application, implementation can be performed according to content of the specification. Moreover, to make the foregoing and other objectives, features, and advantages of the present application more comprehensible, specific implementations of the present application are particularly described below.

### BRIEF DESCRIPTION OF THE DRAWINGS

To describe the technical solutions in the embodiments of the present application more clearly, the accompanying drawings required for describing the embodiments of the present application will be described briefly below. Apparently, the accompanying drawings described below show only some embodiments of the present application, and other drawings can be obtained by a person of ordinary skill in the art from the accompanying drawings without creative efforts.

In the drawings, unless otherwise specified, the same reference signs throughout multiple drawings represent the same or similar components or elements. These drawings may not necessarily be drawn to scale. It should be understood that these drawings only depict some implementations disclosed in the present application and should not be construed as limiting the scope of the present application.
FIG. 1 is a schematic diagram of a connection in a slurry recovery system according to some embodiments of the present application;
FIG. 2 is a schematic flowchart of a slurry recovery method according to some embodiments of the present application;
FIG. 3 is a schematic flowchart of preparing a coarse mixed slurry according to some embodiments of the present application;
FIG. 4 is a schematic flowchart of obtaining a premixed slurry according to some embodiments of the present application;
FIG. 5 is a schematic flowchart of reusing a slurry according to some embodiments of the present application; and
FIG. 6 is a schematic flowchart of a slurry recovery method according to some embodiments of the present application.

### List of reference numerals:

slurry recovery system 10;
first raw material measurement tank 11, second raw material measurement tank 12, sending tank 13, premixing tank 14, disperser 15, first circulation tank 16, second circulation tank 17, first pipe 18, and second pipe 19.

### DETAILED DESCRIPTION

Embodiments of the technical solutions of the present application are described in detail with reference to the accompanying drawings. The following embodiments are used only to describe the technical solutions of the present application more explicitly, and therefore are interpreted only as examples, rather than as limitations on the protection scope of the present application.

Unless otherwise defined, meanings of all technical and scientific terms used in the present application are the same as those usually understood by a person skilled in the art to which the present application belongs. Terms used herein are merely intended to describe objectives of specific embodiments, but are not intended to limit the present application. The terms "include/comprise" and "have" and any variant thereof in the specification and the claims of the present application and the description of the accompanying drawings are intended to cover non-exclusive inclusion.

In the descriptions of the embodiments of the present application, the technical terms "first", "second", and the like are intended only to distinguish different objects, and should not be understood as indicating or implying relative importance or implying the number, specific order, or primary and secondary relationship of indicated technical features. In the descriptions according to the embodiments of the present application, "a plurality of" means two or more, unless otherwise expressly and specifically defined.

An "embodiment" mentioned herein means that a particular feature, structure, or characteristic described with reference to this embodiment may be included in at least one embodiment of the present application. The appearance of this phrase anywhere in the specification does not necessarily refer to the same embodiment, or a separate or alternative embodiment that is mutually exclusive with other embodiments. It is explicitly and implicitly understood by a person skilled in the art that the embodiments described herein may be combined with other embodiments.

The term "and/or" in the descriptions of the embodiments of the present application describes only an association relationship for describing associated objects and represents that three relationships may exist. For example, A and/or B may represent the following three cases: only A exists, both A and B exist, and only B exists. In addition, the character "/" herein generally indicates an "or" relationship between the associated objects.

In the descriptions of the embodiments of the present application, the term "a plurality of" refers to more than two (including two); similarly, "a plurality of groups" refers to more than two groups (including two groups), and "a plurality of pieces" refers to more than two pieces (including two pieces).

In the descriptions of the embodiments of the present application, the orientations or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential" are based on the orientations or positional relationships shown in the accompanying drawings, and are only for the convenience of describing the present application and simplifying the description, rather than indicating or implying that the involved apparatus or element should have a specific orientation or should be configured or operated in the specific orientation, and therefore cannot be understood as limitations on the embodiments of the present application.

In the descriptions of the embodiments of the present application, unless otherwise explicitly specified or defined, the technical terms such as "mount", "connect", "join", and "fix" should be understood in a broad sense. For example, a connection may be a fixed connection, a detachable connection, or an integral connection; the connection may be a mechanical connection or an electrical connection; or the connection may be a direct connection, an indirect connection through an intermediate medium, internal communication between two elements, or an interaction relationship between two elements. For a person of ordinary skill in the art, the specific meanings of the above terms in the embodiments of the present application may be interpreted according to the specific situations.

Currently, from the perspective of development of market situations, power batteries are used in an increasingly wide range. The power batteries are used not only in energy storage power systems such as hydroelectric power plants, thermal power plants, wind power plants, and solar power plants, but also widely used in electric transportation means such as electric bicycles, electric motorcycles, and electric vehicles and in many fields such as military equipment and aerospace. With continuous expansion of application fields of the power batteries, demands in a market of the power batteries are also continuously expanding.

For a production process of a battery, electrode coating is a key process therein, and coating quality is related to battery quality. An electrode slurry used in an electrode coating process is a uniform mixture composed of an active material, a conductive agent, a binder, a solvent, and the like. Quality of the electrode slurry directly affects performance and stability of a battery. A viscosity of the electrode slurry is an important parameter, and determines flowability, coating uniformity, and drying effect of the slurry.

Gravure coating is a common coating process among electrode coating processes, and has advantages such as precise measurement, simple operation, a flat coating surface, and a fast coating speed. A working principle of the gravure coating includes covering engraved dots or lines of a gravure roller with a coating material through rotation of the gravure roller and then transferring the coating material on the gravure roller to a material to be coated.

During gravure coating, the electrode slurry undergoes physical gelation after being in a slurry tray for a period of time, causing wrinkling during coating. In this case, electrode slurry replacement is generally required, while scrap processing is performed on the original electrode slurry. To reduce scrap of the electrode slurry during the gravure coating, recovery processing may be performed on the electrode slurry, so as to obtain a reusable slurry and use the slurry again.

Based on the foregoing consideration, a slurry recovery method is designed. Different slurry preparation processes are selected based on the viscosity of the electrode slurry to process the electrode slurry for obtaining the reusable slurry, so that the recovered electrode slurry can be used again during the gravure coating, thereby reducing the scrap of the electrode slurry and improving utilization of the electrode slurry.

The slurry recovery method disclosed in the embodiments of the present application may be used in, but is not limited to, a production process of a battery used in an electrical apparatus such as a vehicle, a ship, or an aircraft. The slurry recovery method disclosed in the present application may be used to perform recovery processing on the electrode slurry used in the electrode coating process. In this way, it is beneficial to reducing the scrap of the electrode slurry and improving the utilization of the electrode slurry.

For ease of description, the following embodiments are described by using a slurry recovery system 10 according to an embodiment of the present application as an example.

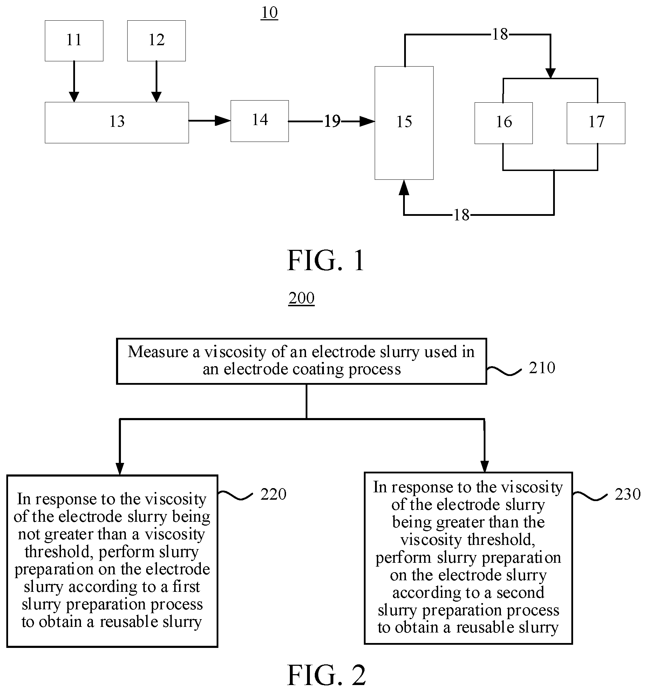

Referring to FIG. 1, the slurry recovery system 10 includes a first raw material measurement tank 11, a second raw material measurement tank 12, a sending tank 13, a premixing tank 14, a disperser 15, a first circulation tank 16, and a second circulation tank 17. The first circulation tank 16 and the second circulation tank 17 are connected to each other through a first pipe 18. The disperser 15 is disposed in the first pipe 18, and is further connected to the premixing tank 14 through a second pipe 19. The disperser 15 includes an impeller (not shown). When rotating, the impeller can dispersively mix solid and/or liquid materials that flow through the disperser 15.

An embodiment of the present application provides a slurry recovery method 200. Referring to FIG. 2, the slurry recovery method 200 includes steps 210 to 230:

Step 210: Measure a viscosity of an electrode slurry used in an electrode coating process.

Step 220: In response to the viscosity of the electrode slurry being not greater than a viscosity threshold, perform slurry preparation on the electrode slurry according to a first slurry preparation process to obtain a reusable slurry.

Step 230: In response to the viscosity of the electrode slurry being greater than the viscosity threshold, perform slurry preparation on the electrode slurry according to a second slurry preparation process to obtain a reusable slurry.

The second slurry preparation process is different from the first slurry preparation process.

The electrode slurry used in the electrode coating process, especially a gravure coating process, shall satisfy a specific viscosity requirement, so as to ensure coating quality. As a coating process goes on, the electrode slurry in a slurry tray undergoes physical gelation, resulting in a change in the viscosity. When recovery processing on the electrode slurry is required, step 210 may be performed to measure the viscosity of the electrode slurry. Step 210 may be completed manually by using a corresponding measurement method, or may be completed by using an automated test method. This is not limited in the present disclosure.

Different slurry preparation processes may be employed to perform slurry preparation on electrode slurries of different viscosities, so as to obtain reusable slurries. Viscosity thresholds for different slurry preparation processes may be predetermined based on parameters such as types, materials, and ratios of the slurries. After the viscosity of the electrode slurry is measured, a slurry preparation process used for the electrode slurry is determined based on a relationship between the viscosity and the viscosity threshold. In step 220, when the viscosity of the electrode slurry is not greater than the viscosity threshold, the slurry preparation is performed on the electrode slurry according to the first slurry preparation process to obtain the reusable slurry. In step 230, when the viscosity of the electrode slurry is greater than the viscosity threshold, the slurry preparation is performed on the electrode slurry according to the second slurry preparation process to obtain the reusable slurry.

The first slurry preparation process and the second slurry preparation process may be determined based on factors such as a type of the electrode slurry, a viscosity range, and the predetermined viscosity threshold.

Different slurry preparation processes are used to process the recovered battery slurry based on the viscosity of the electrode slurry, so that recovered electrode slurries of different viscosities can satisfy a viscosity requirement for reuse after being processed, implementing electrode slurry recovery and reuse, which reduces scrap of the electrode slurry and improves utilization.

According to some embodiments of the present application, the first slurry preparation process includes:

circulating a coarse mixed slurry prepared from a powder material and a solvent, a binder, and the electrode slurry between a first circulation tank 16 and a second circulation tank 17 for first duration via a first pipe 18.

The first pipe 18 connects the first circulation tank 16 and the second circulation tank 17. The first pipe 18 is provided with a disperser 15 including an impeller. The impeller rotates at a first rotational speed.

In step 220, the viscosity of the electrode slurry is not greater than the viscosity threshold. In this case, the viscosity of the electrode slurry is relatively low. Therefore, in the first slurry preparation process, the coarse mixed slurry and the binder are added in addition to the electrode slurry, so that the viscosity of the obtained reusable slurry satisfies the use requirement. In some embodiments, parameters such as materials and ratios of the coarse mixed slurry and the binder that are added in step 220 are the same as parameters in a process of preparing the electrode slurry. In an example, the binder may be a styrene-butadiene latex (GAS).

For a better dispersive mixing effect, the coarse mixed slurry, the binder, and the electrode slurry are circulated between the two circulation tanks. When entering the second circulation tank 17 from the first circulation tank 16 or entering the first circulation tank 16 from the second circulation tank 17, these materials need to flow through the first pipe 18. The disperser 15 is disposed in the first pipe 18. The impeller of the disperser 15 rotates at the first rotational speed. The first rotational speed may be set according to an applicable situation, which is not limited in the present disclosure. In an example, the first rotational speed may be set to 1500 revolutions per minute (rpm).

The coarse mixed slurry, the binder, and the electrode slurry are dispersively mixed by the disperser 15 each time they pass through the disperser 15, so as to achieve a better dispersion effect.

The first duration for which the coarse mixed slurry, the binder, and the electrode slurry are circulated between the two circulation tanks may be set according to an applicable situation, which is not limited in the present disclosure. In an example, the first duration may be set to 15 minutes. It should be understood that the first duration may alternatively be embodied as the number of circulations.

When the viscosity of the recovered electrode slurry is relatively low, the recovered electrode slurry, the coarse mixed slurry, and the binder are circulated by using the two circulation tanks and the disperser, so that the reusable slurry obtained after the circulation has a viscosity satisfying a use requirement and can be used again, thereby improving the utilization of the electrode slurry.

According to some embodiments of the present application, circulating the coarse mixed slurry prepared from the powder material and the solvent, the binder, and the electrode slurry between the first circulation tank 16 and the second circulation tank 17 via the first pipe 18 includes:
rotating the first circulation tank 16 at a second rotational speed, and rotating the second circulation tank 17 at a third rotational speed. The second rotational speed and the third rotational speed are less than the first rotational speed.

When the coarse mixed slurry, the binder, and the electrode slurry are circulated between the first circulation tank 16 and the second circulation tank 17, to achieve a better dispersion effect, the first circulation tank 16 and the second circulation tank 17 may be enabled to be in a rotating state. In some embodiments, rotational speeds of the two circulation tanks may be the same as or different from each other, and may be set to be less than a current rotational speed (that is, the first rotational speed) of the impeller of the disperser 15. In an example, the first circulation tank 16 and the second circulation tank 17 rotate at a same rotational speed, that is, the second rotational speed and the third rotational speed are both set to 30 revolutions per minute (rpm).

Rotation directions of the impeller, the first circulation tank 16, and the second circulation tank 17 are not limited in the present disclosure.

During circulation, the two circulation tanks rotate at the same time when dispersion is performed using the disperser, so that dispersive mixing of the coarse mixed slurry, the binder, and the electrode slurry can be more uniform, thereby improving a dispersion effect.

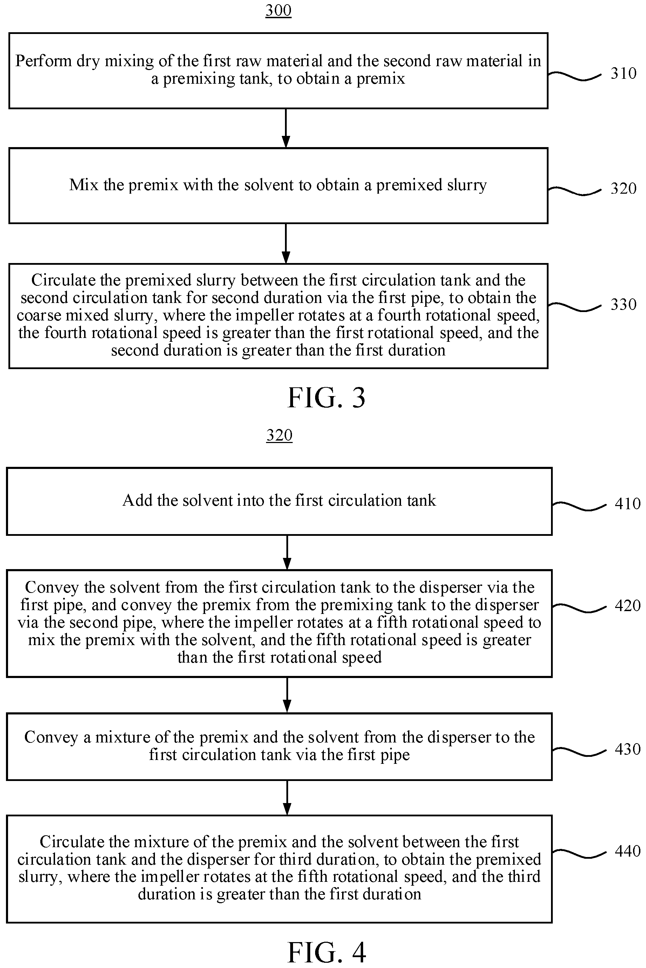

According to some embodiments of the present application, the powder material includes a first raw material and a second raw material. The first slurry preparation process further includes a process 300 for preparing the coarse mixed slurry. Referring to FIG. 3, the process 300 includes steps 310 to 330:
Step 310: Perform dry mixing of the first raw material and the second raw material in a premixing tank 14, to obtain a premix.

Step 320: Mix the premix with the solvent to obtain a premixed slurry.

Step 330: Circulate the premixed slurry between the first circulation tank 16 and the second circulation tank 17 for second duration via the first pipe 18, to obtain the coarse mixed slurry. The impeller rotates at a fourth rotational speed. The fourth rotational speed is greater than the first rotational speed. The second duration is greater than the first duration.

As shown in FIG. 1, the first raw material is added into a first raw material measurement tank 11, and the second raw material is added into a second raw material measurement tank 12. The two types of powder materials are conveyed to the premixing tank 14 through a sending tank 13. In the premixing tank 14, the first raw material and the second raw material are mixed to obtain the premix. The first raw material and the second raw material are solid raw materials in the process of preparing the electrode slurry. In an example, the first raw material may be sodium carboxymethyl cellulose (CMC), and the second raw material may be a conductive carbon powder (GCC).

The premix is mixed with the solvent to obtain the premixed slurry. In an example, the solvent may be deionized water (GSW).

After the premixed slurry is obtained, the premixed slurry is circulated between the first circulation tank 16 and the second circulation tank 17. In each circulation, the premixed slurry flows through the disperser 15 in the first pipe 18. The impeller of the disperser 15 rotates at the fourth rotational speed, to dispersively mix the premixed slurry, thereby achieving a better dispersion effect. In some embodiments, the fourth rotational speed may be set to be greater than the first rotational speed. In an example, the fourth rotational speed may be set to 2250 revolutions per minute (rpm).

The second duration for which the premixed slurry is circulated between the two circulation tanks may be set according to an applicable situation, which is not limited in the present disclosure. In an example, the second duration may be set to 60 minutes. It should be understood that the second duration may alternatively be embodied as the number of circulations.

The two types of powder materials are premixed and then mixed with the solvent, followed by circulation using the two circulation tanks and the disperser, so that dispersive mixing of the coarse mixed slurry is more uniform, thereby improving quality of the coarse mixed slurry.

According to some embodiments of the present application, the disperser 15 is further connected to the premixing tank 14 via a second pipe 19. Referring to FIG. 4, step 320 includes steps 410 to 440:

Step 410: Add the solvent into the first circulation tank 16.

Step 420: Convey the solvent from the first circulation tank 16 to the disperser 15 via the first pipe 18, and convey the premix from the premixing tank 14 to the disperser 15 via the second pipe 19. The impeller rotates at a fifth rotational speed to mix the premix and the solvent. The fifth rotational speed is greater than the first rotational speed.

Step 430: Convey a mixture of the premix and the solvent from the disperser 15 to the first circulation tank 16 via the first pipe 18.

Step 440: Circulate the mixture of the premix and the solvent between the first circulation tank 16 and the disperser 15 for third duration, to obtain the premixed slurry. The impeller rotates at the fifth rotational speed. The third duration is greater than the first duration.

As shown in FIG. 1, the solvent may be added into the first circulation tank 16, and then the solvent may be conveyed to the disperser 15. The premix obtained in step 310 is also conveyed from the premixing tank 14 to the disperser 15. The impeller of the disperser 15 rotates at a fifth rotational speed, to dispersively mix the premix and the solvent.

The mixture of the premix and the solvent, which is obtained after dispersive mixing by the disperser 15 in step 420 may be conveyed to the first circulation tank 16. In step 440, the mixture is circulated between the first circulation tank 16 and the disperser 15, to achieve a better dispersive mixing effect. In step 420 and step 440, the impeller of the disperser 15 may be configured to rotate at the fifth rotational speed. In some embodiments, the fifth rotational speed may be set to be greater than the first rotational speed. In an example, the fifth rotational speed may be set to 2250 revolutions per minute (rpm).

It should be understood that step 420, step 430, and step 440 may be performed asynchronously or synchronously. That is, all the solvent in the first circulation tank 16 and all the premix in the premixing tank 14 may be conveyed to the disperser 15 for dispersive mixing, and then the obtained mixture may be conveyed to the first circulation tank 16, to circulate the mixture between the first circulation tank 16 and the disperser 15. Alternatively, the solvent in the first circulation tank 16 and the premix in the premixing tank 14 may be gradually conveyed to the disperser 15 for dispersive mixing, and then the obtained mixture may be conveyed to the first circulation tank 16. In this case, the first circulation tank 16 may still have the original solvent stored therein. During circulation of the mixture between the first circulation tank 16 and the disperser 15 in step 440, step 420 is possibly being performed at the same time, so that the premix in the premixing tank 14 and the solvent in the first circulation tank 16 are possibly still being gradually conveyed to the disperser 15 for dispersive mixing together with the mixture of the premix and the solvent.

The third duration for which the mixture of the premix and the solvent is circulated between the first circulation tank 16 and the disperser 15 may be set according to an applicable situation, which is not limited in the present disclosure. In an example, the third duration may be set to 70 minutes. It should be understood that the third duration may alternatively be embodied as the number of circulations.

After the premix is obtained, the premix and the solvent are dispersively mixed through the disperser, so that dispersive mixing of the premixed slurry is more uniform, thereby improving quality of the premixed slurry.

According to some embodiments of the present application, circulating the mixture of the premix and the solvent between the first circulation tank 16 and the disperser 15 includes:
rotating the first circulation tank 16 at a sixth rotational speed. The sixth rotational speed is less than the first rotational speed.

When the mixture of the premix and the solvent is circulated between the first circulation tank 16 and the disperser 15, to achieve a better dispersion effect, the first circulation tank 16 may be enabled to be in a rotating state. In some embodiments, a rotational speed of the first circulation tank 16 may be set to the sixth rotational speed that is less than the first rotational speed. In an example, the sixth rotational speed may be set to 30 revolutions per minute (rpm).

Rotation directions of the impeller and the first circulation tank 16 are not limited in the present disclosure.

During circulation, the first circulation tank is rotated at the same time when dispersion is performed using the disperser, so that dispersive mixing of the premix and the solvent can be more uniform, thereby improving a dispersion effect.

According to some embodiments of the present application, the second slurry preparation process includes:
circulating the electrode slurry between the first circulation tank 16 and the second circulation tank 17 for fourth duration via the first pipe 18.

The first pipe 18 connects the first circulation tank 16 and the second circulation tank 17. The first pipe 18 is provided with the disperser 15 including the impeller. The impeller rotates at a seventh rotational speed.

In the second slurry preparation process, the viscosity of the electrode slurry is greater than the viscosity threshold. In this case, the viscosity of the electrode slurry is relatively high. Therefore, the viscosity of the reusable slurry obtained by individually processing the electrode slurry can satisfy the use requirement.

For a better dispersive mixing effect, the electrode slurry is circulated between the two circulation tanks. When entering the second circulation tank 17 from the first circulation tank 16 or entering the first circulation tank 16 from the second circulation tank 17, the electrode slurry needs to flow through the first pipe 18. The disperser 15 is disposed in the first pipe 18. The impeller of the disperser 15 rotates at the seventh rotational speed. The seventh rotational speed may be set according to an applicable situation, which is not limited in the present disclosure. In an example, the seventh rotational speed may be set to 1500 revolutions per minute (rpm).

The electrode slurry is dispersively mixed by the disperser 15 each time it passes through the disperser 15, so as to achieve a better dispersion effect.

The fourth duration for which the electrode slurry is circulated between the two circulation pipes may be set according to an applicable situation, which is not limited in the present disclosure. In an example, the fourth duration may be set to 15 minutes. It should be understood that the fourth duration may alternatively be embodied as the number of circulations.

When the viscosity of the recovered electrode slurry is relatively high, the recovered electrode slurry is individually circulated by using the two circulation tanks and the disperser, so that the reusable slurry obtained after the circulation has a viscosity satisfying the use requirement and can be used again, thereby improving the utilization of the electrode slurry and making it possible to simplify an operation process.

According to some embodiments of the present application, circulating the electrode slurry between the first circulation tank 16 and the second circulation tank 17 via the first pipe 18 includes:
rotating the first circulation tank 16 at an eighth rotational speed, and rotating the second circulation tank 17 at a ninth rotational speed. The eighth rotational speed and the ninth rotational speed are less than the seventh rotational speed.

When the electrode slurry is circulated between the first circulation tank 16 and the second circulation tank 17, to achieve a better dispersion effect, the first circulation tank 16 and the second circulation tank 17 may be enabled to be in a rotating state. In some embodiments, rotational speeds of the two circulation tanks may be the same as or different from each other, and may be set to be less than a current rotational speed (that is, the seventh rotational speed) of the impeller of the disperser 15. In an example, the first circulation tank 16 and the second circulation tank 17 rotate at a same rotational speed, that is, the eighth rotational speed and the ninth rotational speed are both set to 30 revolutions per minute (rpm).

Rotation directions of the impeller, the first circulation tank 16, and the second circulation tank 17 are not limited in the present disclosure.

During circulation, the two circulation tanks are rotated at the same time when dispersion is performed using the disperser, so that dispersive mixing of the recovered electrode slurry can be more uniform, thereby improving a dispersion effect.

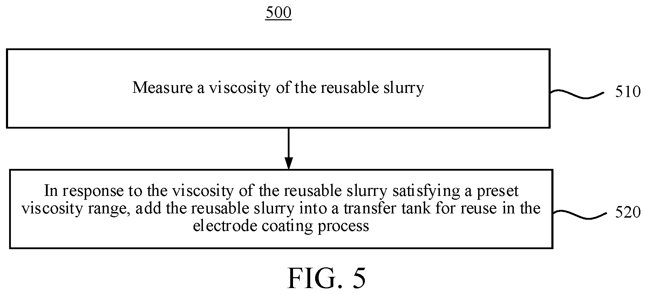

According to some embodiments of the present application, the slurry recovery method 200 further includes a process 500. Referring to FIG. 5, the process 500 includes steps 510 to 520:
Step 510: Measure a viscosity of the reusable slurry.

Step 520: In response to the viscosity of the reusable slurry satisfying a preset viscosity range, add the reusable slurry into a transfer tank (not shown) for reuse in the electrode coating process.

After recovery processing is performed on the electrode slurry, the viscosity of the obtained reusable slurry may be measured, to determine whether the reusable slurry is applicable to the electrode coating process.

The preset viscosity range may be determined according to a requirement of the electrode coating process. In an example, the preset viscosity range may be set to 30 to 1500 millipascals·second.

Step 510 may be completed manually by using a corresponding measurement method, or may be completed by using an automated test method. This is not limited in the present disclosure.

After the recovered electrode slurry is processed, the viscosity of the obtained reusable slurry is measured, and when the viscosity satisfies the use requirement, the reusable slurry can be used again, thereby reducing the scrap of the electrode slurry and improving the utilization.

According to some embodiments of the present application, the electrode coating process includes a gravure process. The electrode slurry includes an anode slurry.

In the electrode coating process, the gravure process may be used to apply the anode slurry. After the anode slurry is prepared, the anode slurry is added into a slurry tray, and electrode coating is completed by using the gravure process. After a period of time, recovery processing may be performed on the anode slurry that undergoes physical gelation, to obtain a reusable slurry.

Through recovery processing on the anode slurry in the gravure process, the slurry can be used again, thereby reducing a waste of the anode slurry in the electrode coating process.

According to some embodiments of the present application, the anode slurry includes sodium carboxymethyl cellulose, a styrene-butadiene latex, a conductive carbon powder, and deionized water. The viscosity threshold is greater than or equal to 40·millipascals·second and less than or equal to 60·millipascals·second.

In a process of preparing the anode slurry, the carboxymethyl cellulose and the conductive carbon powder may be mixed and then further mixed with the deionized water. After well mixing, the styrene-butadiene latex is added, and sufficient dispersive mixing is performed, to obtain the anode slurry.

For the anode slurry, the viscosity threshold for the slurry recovery method 200 may be set to be greater than or equal to 40 millipascals·second and less than or equal to 60 millipascals·second. In an example, the viscosity threshold may be set to 50 millipascals·second.

An appropriate viscosity threshold is selected according to materials included in the anode slurry, to perform corresponding processing on the recovered anode slurry, which allows to improve quality of the obtained reusable slurry.

A specific embodiment of the present application is described below. It should be understood that this particular embodiment is described merely for the purpose of illustration, and should not be construed as a limitation to the present application.

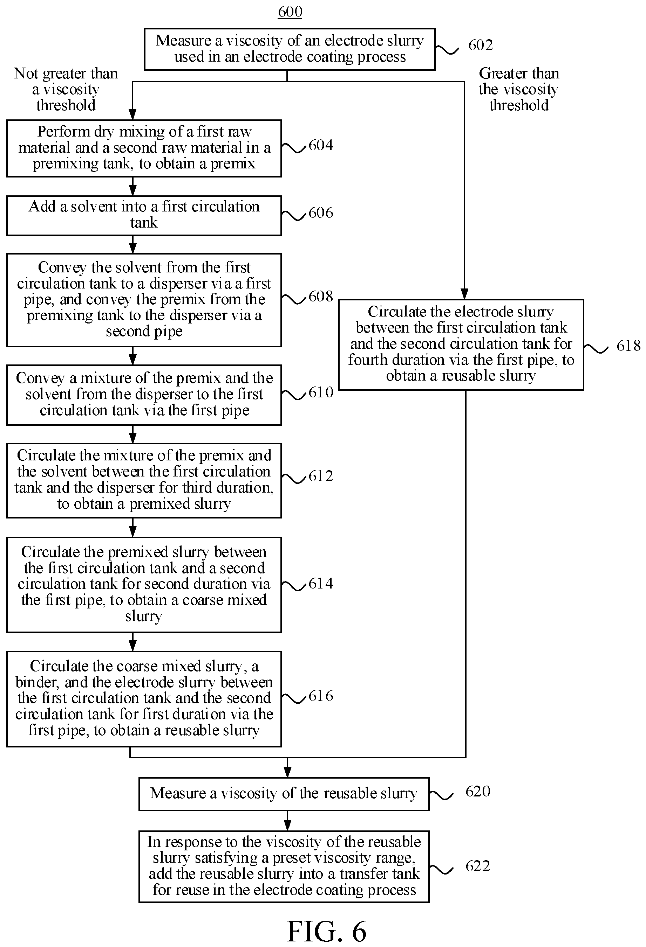

As shown in FIG. 6, an example in which an electrode coating process is a gravure process and an electrode slurry is an anode slurry is used:

In step 602, a viscosity of an electrode slurry, that is, a viscosity of an anode slurry, used in an electrode coating process is measured. A viscosity threshold is set to 50 millipascals·second. After the viscosity of the electrode slurry is obtained, a relationship between the viscosity and the viscosity threshold is determined.

When the viscosity of the electrode slurry is not greater than 50 millipascals·second, slurry preparation is performed on the electrode slurry according to a first slurry preparation process. The first slurry preparation process includes steps 604 to 616.

In step 604, dry mixing of a first raw material and a second raw material is performed in a premixing tank 14, to obtain a premix. The first raw material may be sodium carboxymethyl cellulose, and the second raw material may be a conductive carbon powder. As shown in FIG. 1, the first raw material is added into a first raw material measurement tank 11, and the second raw material is added into a second raw material measurement tank 12. The first raw material and the second raw material are conveyed to the premixing tank 14 through a sending tank 13 for the dry mixing, to obtain the premix.

In step 606, a solvent is added into a first circulation tank 16. The solvent may be deionized water.

In step 608, the solvent is conveyed from the first circulation tank 16 to a disperser 15 via a first pipe 18, and the premix is conveyed from the premixing tank 14 to the disperser 15 via a second pipe 19. An impeller of the disperser 15 rotates at a fifth rotational speed, to mix the premix and the solvent. The fifth rotational speed may be 2250 rpm.

In step 610, a mixture of the premix and the solvent is conveyed from the disperser 15 to the first circulation tank 16 via the first pipe 18.

In step 612, the mixture of the premix and the solvent is circulated between the first circulation tank 16 and the disperser 15 for third duration, to obtain a premixed slurry. The impeller of the disperser 15 rotates at the fifth rotational speed, and the fifth rotational speed may be 2250 rpm. The first circulation tank 16 rotates at a sixth rotational speed, and the sixth rotational speed may be 30 rpm. The third duration may be 70 minutes.

In step 614, the premixed slurry is circulated between the first circulation tank 16 and a second circulation tank 17 for second duration via the first pipe 18, to obtain a coarse mixed slurry. The impeller of the disperser 15 rotates at a fourth rotational speed, and the fourth rotational speed may be 2250 rpm. The first circulation tank 16 and the second circulation tank 17 may rotate at a rotational speed of 30 rpm. The second duration may be 60 minutes.

In step 616, the coarse mixed slurry, a binder, and the electrode slurry are circulated between the first circulation tank 16 and the second circulation tank 17 for first duration via the first pipe 18, to obtain a reusable slurry. The binder may be a styrene-butadiene latex. The impeller of the disperser 15 rotates at a first rotational speed, and the first rotational speed may be 1500 rpm. The first circulation tank 16 rotates at a second rotational speed, and the second circulation tank 17 rotates at a third rotational speed. The second rotational speed and the third rotational speed may be 30 rpm. The first duration may be 15 minutes.

In the first slurry preparation process, materials and masses of the first raw material, the second raw material, the solvent, and the binder may be as shown in Table 1:

**Table 1 Materials and masses of the first raw material, the second raw material, the solvent, and the binder**

| Material | Mass (unit: kilogram) |
|---|---|
| First raw material (sodium carboxymethyl cellulose) | 1.0656 |
| Second raw material (conductive carbon power) | 21.4785 |
| Solvent (deionized water) | 325.0478 |
| Binder (styrene-butadiene latex) | 22.4081 |

In the first slurry preparation process, slurry preparation temperature may be 5 to 65 degrees centigrade.

When the viscosity of the electrode slurry is greater than 50 millipascals·second, slurry preparation is performed on the electrode slurry according to a second slurry preparation process. The second slurry preparation process includes step 618.

In step 618, the electrode slurry is circulated between the first circulation tank 16 and the second circulation tank 17 for fourth duration via the first pipe 18, to obtain a reusable slurry. The impeller of the disperser 15 in the first pipe 18 rotates at a seventh rotational speed, and the seventh rotational speed may be 1500 rpm. The first circulation tank 16 rotates at an eighth rotational speed, and the second circulation tank 17 rotates at a ninth rotational speed. The eighth rotational speed and the ninth rotational speed may be 30 rpm. The fourth duration may be 15 minutes.

In the second slurry preparation process, slurry preparation temperature may be 5 to 65 degrees centigrade.

After the reusable slurry is obtained, step 620 is performed to measure a viscosity of the reusable slurry. During measurement, the first circulation tank 16 and the second circulation tank 17 may be in a state of rotating at a rotational speed of 30 rpm.

Based on the measured viscosity of the reusable slurry and a preset viscosity range, whether the reusable slurry can be used again may be determined. The preset viscosity range may be 30 to 1500 millipascals·second. In step 622, if the viscosity of the reusable slurry satisfies the preset viscosity range, the reusable slurry is added into a transfer tank for reuse in the electrode coating process.

Finally, it should be noted that the foregoing embodiments are only used for describing the technical solutions of the present application, but are not intended to limit the present application. Although the present application is described in detail with reference to the foregoing embodiments, a person of ordinary skill in the art shall understand that, modifications may still be made to the technical solutions in the foregoing embodiments, or equivalent replacements may be made to some or all of the technical features. The modifications and equivalent replacements, which do not make the essence of the corresponding technical solutions depart from the scope of the technical solutions of the embodiments of the present application, fall within the scope of the claims and specification hereof. In particular, various technical features mentioned in the embodiments can be combined in any manner provided that there is no structural conflict. The present application is not limited to the specific embodiments disclosed herein, but includes all technical solutions falling within the scope of the claims.

## Claims

1. A slurry recovery method (200), comprising:
measuring a viscosity of an electrode slurry used in an electrode coating process; and
in response to the viscosity of the electrode slurry being not greater than a viscosity threshold, performing slurry preparation on the electrode slurry according to a first slurry preparation process to obtain a reusable slurry; or
in response to the viscosity of the electrode slurry being greater than the viscosity threshold, performing slurry preparation on the electrode slurry according to a second slurry preparation process to obtain a reusable slurry, wherein
the second slurry preparation process is different from the first slurry preparation process.

2. The method (200) according to claim 1, wherein the first slurry preparation process comprises:
circulating a coarse mixed slurry prepared from a powder material and a solvent, a binder, and the electrode slurry between a first circulation tank (16) and a second circulation tank (17) for first duration via a first pipe (18), wherein
the first pipe (18) connects the first circulation tank (16) and the second circulation tank (17), the first pipe (18) is provided with a disperser (15) comprising an impeller, and the impeller rotates at a first rotational speed.

3. The method (200) according to claim 2, wherein circulating the coarse mixed slurry prepared from the powder material and the solvent, the binder, and the electrode slurry between the first circulation tank (16) and the second circulation tank (17) via the first pipe (18) comprises:
rotating the first circulation tank (16) at a second rotational speed, and rotating the second circulation tank (17) at a third rotational speed, the second rotational speed and the third rotational speed being less than the first rotational speed.

4. The method (200) according to claim 2 or 3, wherein the powder material comprises a first raw material and a second raw material, and the first slurry preparation process further comprises the following steps for preparing the coarse mixed slurry:
performing dry mixing of the first raw material and the second raw material in a premixing tank (14), to obtain a premix;
mixing the premix with the solvent to obtain a premixed slurry; and
circulating the premixed slurry between the first circulation tank (16) and the second circulation tank (17) for second duration via the first pipe (18), to obtain the coarse mixed slurry, wherein the impeller rotates at a fourth rotational speed, the fourth rotational speed is greater than the first rotational speed, and the second duration is greater than the first duration.

5. The method (200) according to claim 4, wherein the disperser (15) is further connected to the premixing tank (14) via a second pipe (19), and mixing the premix with the solvent to obtain the premixed slurry comprises:
adding the solvent into the first circulation tank (16);
conveying the solvent from the first circulation tank (16) to the disperser (15) via the first pipe (18), and conveying the premix from the premixing tank (14) to the disperser (15) via the second pipe (19), wherein the impeller rotates at a fifth rotational speed to mix the premix with the solvent, and the fifth rotational speed is greater than the first rotational speed;
conveying a mixture of the premix and the solvent from the disperser (15) to the first circulation tank (16) via the first pipe (18); and
circulating the mixture of the premix and the solvent between the first circulation tank (16) and the disperser (15) for third duration, to obtain the premixed slurry, wherein the impeller rotates at the fifth rotational speed, and the third duration is greater than the first duration.

6. The method (200) according to claim 5, wherein circulating the mixture of the premix and the solvent between the first circulation tank (16) and the disperser (15) comprises:
rotating the first circulation tank (16) at a sixth rotational speed, the sixth rotational speed being less than the first rotational speed.

7. The method (200) according to any one of claims 1 to 6, wherein the second slurry preparation process comprises:
circulating the electrode slurry between the first circulation tank (16) and the second circulation tank (17) for fourth duration via the first pipe (18), wherein
the first pipe (18) connects the first circulation tank (16) and the second circulation tank (17), the first pipe (18) is provided with the disperser (15) comprising the impeller, and the impeller rotates at a seventh rotational speed.

8. The method (200) according to claim 7, wherein circulating the electrode slurry between the first circulation tank (16) and the second circulation tank (17) via the first pipe (18) comprises:
rotating the first circulation tank (16) at an eighth rotational speed, and rotating the second circulation tank (17) at a ninth rotational speed, the eighth rotational speed and the ninth rotational speed being less than the seventh rotational speed.

9. The method (200) according to any one of claims 1 to 8, further comprising:
measuring a viscosity of the reusable slurry; and
in response to the viscosity of the reusable slurry satisfying a preset viscosity range, adding the reusable slurry into a transfer tank for reuse in the electrode coating process.

10. The method (200) according to any one of claims 1 to 9, wherein the electrode coating process comprises a gravure process, and the electrode slurry comprises an anode slurry.

11. The method (200) according to claim 10, wherein the anode slurry comprises sodium carboxymethyl cellulose, a styrene-butadiene latex, a conductive carbon powder, and deionized water, and the viscosity threshold is greater than or equal to 40 millipascals·second and less than or equal to 60 millipascals·second.
